# EUROPEAN PATENT SPECIFICATION

(11) **EP 0 363 910 B1**
(45) Date of publication and mention of the grant of the patent: **07.09.1994**
(21) Application number: 89118825.2
(22) Date of filing: 10.10.1989
(51) Int. Cl.: C01F 7/36, B01J 21/04

(54) **Method for controlling specific surface area of alumina**
Verfahren zur Regulierung spezifischer Oberflächen von Aluminiumoxid
Procédé pour le contrôle de surface spécifique d'alumine

(30) Priority: 11.10.1988 JP 253835/88
(43) Date of publication of application: 18.04.1990
(73) Proprietor: AGENCY OF INDUSTRIAL SCIENCE AND TECHNOLOGY, Chiyoda-ku Tokyo (JP); NISSAN MOTOR COMPANY, LIMITED, Yokohama-shi Kanagawa 221 (JP)
(72) Inventor: Mizukami, Fujio, Ushiku-shi Ibaraki-ken (JP); Maeda, Kazuyuki, Tsukuba-shi Ibaraki-ken (JP); Niwa, Shuichi, Tsukuba-shi Ibaraki-ken (JP); Toba, Makoto, Tsukuba-shi Ibaraki-ken (JP); Mine, Junichi, Yokohama-shi Kanagawa-ken (JP)
(74) Representative: Grünecker, Kinkeldey, Stockmair & Schwanhäusser Anwaltssozietät

(56) References cited:
- EP-A- 0 177 198
- EP-A- 0 199 930
- FR-A- 2 624 405
- JP-A-62 122 133
- US-A- 4 275 052

## Description

The present invention relates to a process for the production of alumina which is useful e.g. as an operational material, such as, e.g. a support of a catalyst or sensor, as a separation and purification agent, absorption agent, filter medium and a filler in gel chromatography. More specifically, the invention relates to a method for controlling the porous structure of alumina whereby the specific surface area thereof is controlled.

As is well known, the properties of alumina vary significantly with the specific surface area when it is used e.g. as an operational material, separation and purification agent, absorption agent, filter medium or filler in gel chromatography. Therefore, various attempts have been made to control the specific surface area of e.g. alumina and silica-alumina compositions in order to obtain the desired properties.

It will be appreciated that naturally the specific surface area of alumina depends upon the particle size and the porous structure of the alumina particle. Therefore, the specific surface area of alumina can be controlled by controlling the primary particle size and/or the number and the diameter of the voids on the alumina particle.

In one approach, the alumina particle size is controlled by the pH swing method proposed in "Catalyst Chemical Course (Shokubai Kagaku Koza) = Catalyst Design" published by Catalyst Academy, page 132. In the proposed process, aluminium salt is precipitated in a solution as a mixture of boehmite A10(OH) and amorphous aluminium hydroxide. Then the pH is adjusted for smelting the amorphous aluminium hydroxide and growing boehmite particles.

In this method, the obtained alumina is often contaminated by an agent adjusting the pH to alkaline. Furthermore, alumina obtained through such a precipitation process generally has a substantially low heat resistance. Typically after a high temperature treatment, such as at 1000°C for three hours, the specific surface area will be reduced to 70 m²/g or less. Such a specific surface area is insufficient. Therefore, alumina produced through the precipitation process cannot be used as a support for a catalyst or sensor which is subjected to rather high heat. In view of this, the precipitation process for the production of alumina is applicable only in limited fields of use.

On the other hand, another typical method for controlling the porous structure of alumina is to use organic compounds. Such methods have been proposed in "J. Catal." Vol. 1, 1962, pages 1 and 547 to 563, and "Catalyst" Vol. 1, No. 3, 1978, page 144. In the proposed process, an organic component is dissolved in a solution of an aluminium salt to obtain precipitation of alumina or is added to an alumina hydrate or a dried gel. In general, e.g. polyethylene glycol, polyvinyl alcohol, polyacryl amide and cellulose ether are used as the organic compounds.

The size of the void of the alumina obtained through the process set forth may lie within a range of 20Å to 100,000Å. Such a wide range variation of the void size may make alumina useless in the application as a filter medium, separation and purification agent and absorption agent which all require a comparatively high selectivity.

A similar process has also been proposed in Japanese Patent First (unexamined) Publications (Tokkai) Showa 60-21802 and 61-68314. In the former, Tokkai Showa 60-21802, a process for the precipitation of alumina from a sodium aluminate solution in the presence of an organic halogen compound has been proposed. In the latter, Tokkai Showa 61-68314, a process for the gelation of a metallic alkoxide in the presence of a dihydric alcohol or amino alcohol has been proposed.

In the former case, the void size ranges within the range of 10Å to 30Å. However, the alkaline component remains in the produced alumina and causes the lowering of the specific surface area at a high temperature. On the other hand, in the latter case, the void size can be controlled to be no more than 10Å. However, in this case, voids having a size of 40Å to 500 Å are also formed. Therefore, in the latter case, the control of the void size is not at all satisfactory.

A further approach has been proposed in "Catalyst" Vol. 20, No. 2, 1978, pages 144 to 154. In the proposed process, alumina hydrate is subject to a treatment with a monohydric alcohol or acid. In this case, the specific surface area range is limited, e.g. to 197 m²/g to 300 m²/g or 199 m²/g to 230 m²/g. In addition, the alumina thus produced lacks heat resistance and can cause a lack of the specific surface area at a high temperature range.

US-A-4,275,052 relates to a process whereby an aluminium alkoxide is dissolved in an organic solvent which may be an ether, aldehyde or ketone or mixture thereof, the alkoxide/solvent mixture is hydrolised with water/organic solvent mixture and the formed solid material is dried and calcined.

In view of the background art set forth above, it is the object of the present invention to provide a method for controlling the specific surface area of alumina while providing a sufficiently high heat resistance in order to maintain a sufficiently high specific surface area even at a high temperature range.

In order to achieve the aforementioned object, the present invention provides a process for the production of alumina comprising the steps of
a) dissolving an aluminium alkoxide in an organic polyether solvent so that the aluminium alkoxide reacts with the polyether to form a sol;
b) hydrolysing the sol so that a gel is formed;
c) drying the gel and baking the dried gel so that alumina is obtained.

The present invention will be understood more fully from the detailed description given herebelow and from the accompanying drawings of the preferred embodiments of the invention.
**Figs. 1(A), 1(B), 1(C), 1(D)** and **1(E)** respectively, show the pore distribution of examples 1(b), 2(c), 6(c) and 2(c).
**Fig. 2** shows the pore distribution of the comparative example 1(b); and
**Fig. 3** shows the pore distribution of alumina treated by adding Carbowax®.

As set forth above, the process for the production of alumina having a uniform pore distribution and a high specific surface area according to the present invention includes the step of dissolving an aluminium alkoxide in an organic polyether solvent so that the aluminium alkoxide reacts with the polyether to form a sol. Then, the sol is subjected to a hydrolysis process so that a gel is formed. The gel is then dried and baked so that alumina is obtained as the final product. The polyether is found to be effective for controlling the porous structure of alumina.

Preferably, the polyether to be used as organic solvent is represented by the following general formula:

R₁(OR₂)ₗ(OR₃)ₘ(OR₄)ₙ OR₅

wherein R₁ is an alkyl group, R₂ to R₄ are an alkylene group and R₅ is an alkyl group or hydrogen, l is an integer of at least 1 and m and n are 0 or 1.

The reaction of the aluminium alkoxide and the polyether solvent to form the sol is preferably performed at a temperature of 10°C to the boiling point of the polyether. The polyether may have 1 to 12 carbon atoms in the alkyl group and 2 to 16 carbon atoms in the alkylene group, with the sum of l, m and n being 1 to 6. More preferably, the polyether may include 1 to 8 carbon atoms in the alkyl group and 2 to 12 carbon atoms in the alkylene group, with the sum of l, m and n being 1 to 4.

Baking of the dried alumina gel is preferably performed at a temperature of 400°C to 1200°C, and more preferably at 600°C to 1150°C.

Generally, an aluminium ion may form a tetracoordinated tetrahedron and an octacoordinated octahedron. Alumina is a high polymer created by covalently bonding the polygons at their peaks, edges or faces via oxygen or hydroxyl groups to one another. Accordingly, various structures and various molecular aluminas can be produced depending upon the kind and the structure of the hydroxide produced through the hydrolysis process and the dehydration condensation. Naturally, the specific surface area of alumina depends upon its molecular structure. Generally, a higher specific surface area can be obtained with smaller molecules, in other words with a smaller particle size of the primary particle. Also, a tetrahedral structure will provide a higher specific surface area than an octahedron. However, when the particle size is too small, the surface energy becomes excessive and the number of non-bridged hydroxyl groups is increased. Consequently, there is a high possibility that a simple fusion or a dehydrating fusion occurs at high temperatures causing the lowering of the specific surface area. On the other hand, if there is an excess number of tetrahedral structure alumina particles, the amount of non-bridged coordinated water or hydroxyl groups is increased in order to neutralise the electric charge. This also causes the lowering of the specific surface area. Therefore, in order to obtain alumina with a high specific surface area at a high temperature, the hydrolysis process and the dehydrating polymerization process have to be appropriately adjusted and controlled so as to obtain the appropriate structure and molecules of the primary particles of alumina.

In view of this, according to the invention, the hydrolysis and the condensation of the aluminium alkoxide is controlled by polyethers that control the particle size and structure and thus the porous structure, whereby in turn the specific surface area is controlled. The polyether to be used in the present invention contains two or more oxygens which are capable of coordinating with the aluminium ion. The polyether is used to perform a complex forming reaction or a ligand conversion reaction. Through these reactions, a unidentate ligand coordinates to the aluminium ion if the polyether contains two or more oxygens, or a chelate coordination or bridging coordination occurs if the polyether contains tow or more oxygens. However, since the coordination bond with the oxygen of the ether is generally weaker than with a hydroxyl group, it can be easily replaced by a hydroxyl group when attached. This property is effective for performing hydrolysis and condensation. Therefore, by blocking and bridging the coordinating points, i.e. the peaks of the tetrahedron and octahedron, the hydrolysis and the dehydrating polymerization of the aluminium alkoxide can be controlled. Thus, the solution and the gelation of the aluminium alkoxide can be controlled. As a result, alumina with uniform qualities and with a high specific surface area at high temperatures can be obtained.

Polyethers suitable for use in the present invention are represented by the general formula:

R₁(OR₂)ₗ(OR₃ₘ(OR₄)ₙ OR₅

wherein R₁ to R₅ may include an unsaturated bond. However, it is preferred that such an unsaturated bond is excluded. Therefore, R₁ is an alkyl group, R₂ to R₄ are an alkylene group and R₅ is an alkyl group or hydrogen, l is an integer of at least 1 and m and n are 0 or 1.

When the molecular weight becomes high, polyethers generally become solid and difficult to use. For this reason, it is preferred that the alkyl group contains 1 to 12 carbon atoms, more preferably 1 to 8, and the alkylene group contains 2 to 16 carbon atoms, and more preferably 2 to 12, and the sum of l, m and n is 1 to 6, and more preferably, 1 to 4.

A polyether satisfying the foregoing condition may be selected e.g. from diethylene glycol monomethylether, diethylene glycol dimethylether, diethylene glycol monoethylether, diethylene glycol diethylether, diethylene glycol dibutylether, tetraethylene glycol dimethylether, ethyl cellosolve, dodecandiol dimethylether, hexanediol dimethylether, hexanediol diethylether, diethylene glycol monobutylether, dipropylene glycol dimethylether, diethylene glycol and butylmethylether.

The polyether used in this invention is preferably present in an amount of 0.5 mol or more per 1 mol of aluminium alkoxide. Since the polyether forms a coordination bond with aluminium alkoxide, the excess amount of the polyether may remain in the gel even after hydrolysis and makes the baking process dangerous. Therefore, the upper limit of the polyether amount may be 5 mol, and preferably 3 mol per 1 mol of aluminium alkoxide. On the other hand, when the amount of polyether is too small, it may become difficult to dissolve the aluminium alkoxide, which causes a delay of the reaction. In this case, another solvent may also be used in combination with the polyether. Such an additional solvent may be selected among various solvents which can dissolve both the aluminium alkoxide and the polyether and which will have a lower coordination bonding ability than the polyether. For example, hydrocarbons or halogenides, such as benzene and toluene can be used as the additional solvent.

In this invention, it is possible to use any alkoxide for forming the aluminium alkoxide. In view of the costs and processing ability, material which is easily dissolved by polyethers such as, e.g. aluminium methoxide, aluminium ethoxide, aluminium iso-propoxide, aluminium n-propoxide, aluminium n-butoxide, aluminium sec-butoxide and aluminium tert-butoxide, is preferably used.

The temperature for dissolving the aluminium alkoxide in the polyether is not particularly limited but lies within the range from the melting point to the boiling point of the polyether. However, if the temperature is too low, the dissolution of the aluminium alkoxide and the complex formation with the polyether will become slow. Therefore, the preferred temperature range is 40°C to 190°C.

The amount of water used in the hydrolysis process is closely related to the amount of alumina particles to be produced and the specific surface area of the alumina. When the amount of water used in the hydrolysis process is too small, the alumina gel may contain unacceptably large amounts of the organic compound after the drying process whereby fusion is easily caused during the high temperature baking process. On the other hand, an excess amount of water may create large molecules of alumina particles through the solation and gelation process for reducing the specific surface area. Therefore, the amount of water to be used in the hydrolysis process lies preferably in the range of 0.5 mol to 20 mol per 1 mol of aluminium alkoxide, and further preferably in the range of 2 mol to 10 mol. Water may be added directly, or, alternatively, diluted with an appropriate solvent.

In the preferred process of the invention, after adding the water the solution is processed into a gel form via a sol form. It is possible to dry the gel under reduced pressure by an ordinary process. Alternatively, it may also be possible to put the sol or undried gel onto a honeycomb support or impregnate the support therewith and subsequently dry it under reduced pressure in an ordinary way. Therefore, the obtained gel can be dried in any way.

After the drying of the gel, a baking step is performed for obtaining a stronger structure of the alumina. Furthermore, since the alumina gel obtained through the process of the present invention contains an organic compound such as a polyether, this organic component has to be completely burnt off. Therefore, it is desirable to perform the baking process at a temperature higher than that normally marketed. The preferred temperature of baking in the preferred process lies in the range of 400°C to 1200°C, and more preferably in the range of 600°C to 1150°C. It is possible to perform a pre-heating step before performing the baking process in an atmosphere of e.g. nitrogen, argon or helium. The pre-heating process may be particularly effective in view of preventing an explosion which may be caused by the abrupt combustion of the organic component, when a large amount of alumina is baked.

### EXAMPLES

In order to demonstrate advantages of the alumina production process with control of the specific surface area according to the present invention, in comparison with the prior proposed processes, examples will be given herebelow.

### EXAMPLE 1

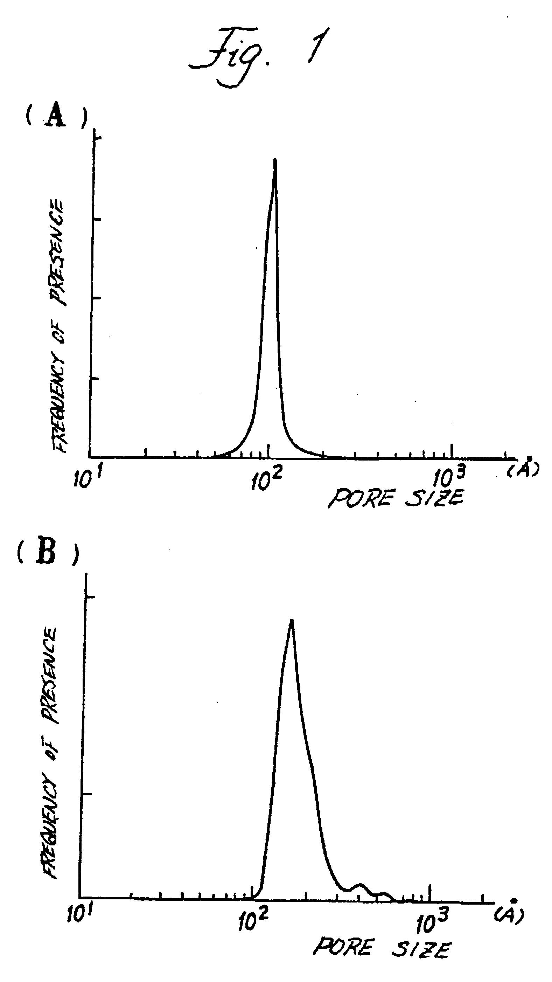

0.59 mol of aluminium isopropoxide [Al(O-iso-Pr)₃] were put in a beaker of 500 ml capacity. To this, diethylene glycol dimethylether was added and the mixture was heated at a temperature of 120°C for 4h in a hot water bath under stirring to form a melt. After 4h, the bath temperature was lowered to 100°C. Subsequently, 90g of water were added to the melt to form a solution. The solution was left overnight at a constant temperature (i.e. 100°C) to obtain a gel. The obtained gel was transferred to an eggplant flask. In the flask the obtained gel was subjected to a drying process at a process temperature of 100°C to 170°C under a vacuum atmosphere. After the drying process, 53g of dried gel were obtained. The gel was subjected to several stages of a baking process. The baking process was performed at 300°C for 1h, 450°C, 600°C and 800°C for 3 h, respectively. Through this baking a white alumina powder was obtained. In addition, by performing a further baking step at 1020°C for 3h, a similar white alumina powder was obtained. The pore distribution of the latter sample was measured by mercury pressurization. The result of the measurement is shown in **Fig. 1A.** As can be seen from **Fig. 1A**, the pore distribution of the sample exhibits a high concentration around 100 Å having a peak at 100 Å. The specific surface areas of the former and the latter examples are also shown in the appended table.

### EXAMPLE 2

Instead of diethylene glycol dimethylether as in the foregoing Example 1, triethylene glycol dimethylether was used. After adding water to the melt, the solution thus obtained was left at room temperature for two days. The remaining processes performed were substantially the same as in Example 1. At the final baking stage, sample (a) was obtained by baking at a temperature of 600°C for 3h, sample (b) was obtained by baking at a temperature of 800°C for 3h, and sample (c) was obtained by baking at a temperature of 1020°C. The pore distribution measured by mercury pressurization for sample (c) is shwon in **Fig. 1D.** In this case, a high concentration of the pore distribution around 160 Å with a sharp peak at 160 Å was observed. The specific surface areas of respective samples (a), (b) and (c) are shown in the appended table.

### EXAMPLE 3

0.59 mol of aluminium isopropoxide were put into a beaker of 50 ml capacity. To this 0.56 mol of tetraethylene glycol dimethylether were added. Then, the mixture was heated at a temperature of 120°C in a hot water bath for 4h while stirring. The bath temperature was thereafter lowered to 90°C. Subsequently, 90g of water were added to form a solution. The solution thus formed was left at room temperature for two days to obtain a gel. The obtained gel was transferred to the eggplant flask and dried therein at 130°C to 170°C. By the drying process, 76g of dried gel were obtained. The gel was subjected to several stages of a baking process. The baking process was performed at 300°C for 1h and 450°C, 600°C, 800°C and 1020°C, respectively, each for 3h. By this baking, a white alumina powder was obtained. For the latter sample the pore distribution was measured by mercury pressurization. The result of the measurement is shown in **Fig. 1E**. As can be seen from **Fig. 1E**, the pore distribution of the sample exhibits a high concentration around 180 Å, having a peak at 180 Å. The specific surface areas of the former and the latter examples are also shown in the appended table.

### EXAMPLE 4

Instead of diethylene glycol dimethylether, diethylene glycol diethylether was used. The reaction was performed at 120°C for 5h. The subsequent processes were performed as in Example 1. At the final baking stage, sample (a) was obtained by baking at a temperature of 600°C for 3h, sample (b) was obtained by baking at a temperature of 800°C for 3h and sample (c) was obtained by baking at a temperature of 1020°C. The pore distribution measured by mercury pressurization for sample (c) is shown in **Fig. 1B.** In this case, a high concentration of the pore distribution around 155 Å with a sharp peak at 155 Å was observed. The specific surface areas of the respective samples (a), (b) and (c) are shown in the appended table.

### EXAMPLE 5

0.30 mol of aluminium isopropoxide were put in an eggplant flask of 300 ml capacity. To this 0.32 mol of diethylene glycol di-n-butylether were added. The mixture was heated at 80°C for 8h while stirring. To the melt, 50g of water were added to form a solution. Thereafter, the solution was left at 80°C for one day to obtain a gel. The obtained gel was dried at 100°C to 170°C under vacuum atmosphere to obtain the dried gel. The dried gel was heated at a temperature of 300°C for 1h and subsequently, sample (a) was obtained through baking at a temperature of 450°C and 600°C, each for 3h, sample (b) was obtained through further baking at a temperature of 800°C for 3h, and sample (c) was obtained through further baking at a temperature of 1020°C for 3h. The specific surface areas of the respective samples (a), (b) and (c) are shown in the appended table.

### EXAMPLE 6

Instead of performing the reaction at 80°C for 8h the reaction was performed at 120°C for 4h. Thereafter the bath temperature was lowered to 100°C. Subsequently the same operation as in Example 5 was performed. At the final baking stage, sample (a) was obtained through baking at a temperature of 600°C for 3h, sample (b) was obtained through baking at a temperature of 800°C for 3h, and sample (c) was obtained through baking at a temperature of 1020°C for 3h. The pore distribution measured by mercury pressurization for the sample (c) is shown in **Fig. 1C.** In this case, a high concentration of pore distribution around 170 Å with a sharp peak at 170 Å was observed. The specific surface areas of the respective samples (a), (b) and (c) are shown in the appended table.

### EXAMPLE 7

Instead of performing the reaction at 120°C for 4h, the reaction was performed at 150°C for 3h. Subsequently, the same operation as in Example 6 was performed. At the final baking stage, sample (a) was obtained through baking at a temperature of 800°C for 4h, and sample (b) was obtained through baking at a temperature of 1020°C for 3h. The specific surface areas of the respective samples (a) and (b) are shown in the appended table.

### EXAMPLE 8

0.58 mol of aluminium isopropoxide were put in a beaker of 500 ml capacity. To this 1.0 mol of diethylene glycol monomethylether were added. Then, the mixture was heated for 6h at a temperature of 80°C in a hot water bath while stirring. Subsequently, 90g of water were added to form a solution. The solution thus formed was left at 80°C for one day to obtain a gel. The obtained gel was transferred to an eggplant flask and dried therein at a temperature in the range of 100°C to 170°C. Through the drying process, 44g of dried gel were obtained. The gel was subjected to several stages of a baking process. The baking process was performed at 300°C for 1h and 450°C, 600°C and 800°C for 3h, respectively, to obtain a white alumina powder. In addition, further baking at 1020°C for 3h was performed. The specific surface areas of the former and the latter examples are shown in the appended table.

### EXAMPLE 9

Instead of performing the reaction at 80°C for 6h the reaction was performed at 120°C for 4.5h. Thereafter, the bath temperature was lowered to 100°C. Subsequently, the same operation as in Example 5 was performed. At the final baking stage, sample (a) was obtained through baking at a temperature of 600°C for 3h, sample (b) was obtained through baking at a temperature of 800°C for 3h, sample (c) was obtained through baking at a temperature of 1020°C for 3h and sample (d) was obtained through baking at 1020°C for 48h. The specific surface areas of the respective samples (a), (b), (c) and (d) are shown in the appended table.

### EXAMPLE 10

Instead of performing the reaction at 120°C for 4.5h the reaction was performed at 170°C for 1.5h. Subsequently, the same operation as in Example 6 was performed. At the final baking stage, sample (a) was obtained through baking at a temperature of 800°C for 3h, and sample (b) was obtained through baking at a temperature of 1020°C for 3h. The specific surface areas of the respective samples (a) and (b) are shown in the appended table.

### EXAMPLE 11

Instead of diethylene glycol dimethylether, diethylene glycol monoethylether was used. The reaction was performed at 120°C for 6h. The subsequent process was performed through the same process as that in Example 1. At the final baking stage, sample (a) was obtained through baking at a temperature of 800°C for 3h, sample (b) was obtained through baking at a temperature of 1020°C for 3h. The specific surface areas of the respective samples (a) and (b) are shown in the appended table.

### EXAMPLE 12

Instead of performing the reaction at 120°C for 6h, the reaction was performed at 170°C for 1.5h. Subsequently, the same operation as in Example 1 was performed. At the final baking stage, sample (a) was obtained through baking at a temperature of 800°C for 3h, and sample (b) was obtained through baking at a temperature of 1020°C for 3h. The specific surface areas of the respective samples (a) and (b) are shown in the appended table.

### EXAMPLE 13

Instead of diethylene glycol dimethylether, diethylene glycol mono-n-buthylether was used. The reaction was performed at 120°C for 5h. The subsequent process was performed through the same process as that in Example 1. At the final baking stage, sample (a) was obtained through baking at a temperature of 800°C for 3h, sample (b) was obtained through baking at a temperature of 1020°C for 3h. The specific surface areas of the respective samples (a) and (b) are shown in the appended table.

### EXAMPLE 14

Instead of diethylene glycol dimethylether, ethylene glycol monoethylether was used. The reaction was performed at 120°C for 6h. The subsequent process was performed through the same process as that in Example 1. At the final baking stage, a sample was obtained through baking at a temperature of 800°C for 3h. The specific surface area of the sample is shown in the appended table.

### EXAMPLE 15

Instead of diethylene glycol dimethylether, ethylene glycol, dimethylether was used. The reaction was performed at 80°C for 1.5h and at 100°C for 2.5h. The subsequent process was performed through the same process as that in Example 1. At the final baking stage, sample (a) was obtained through baking at a temperature of 800°C for 3h, sample (b) was obtained through baking at a temperature of 1020°C for 3h. The specific surface area of the respective samples (a) and (b) are shown in the appended table.

### EXAMPLE 16

Instead of diethylene glycol dimethylether, dipropylene glycol dimethylether was used. The reaction was performed at 120°C for 4h. The subsequent process was performed through the same process as that in Example 1. At the final baking stage, sample (a) was obtained through baking at a temperature of 800°C for 3h, sample (b) was obtained through baking at a temperature of 1020°C for 3h. The specific surface areas of the respective samples (a) and (b) are shown in the appended table.

### COMPARATIVE EXAMPLE 1

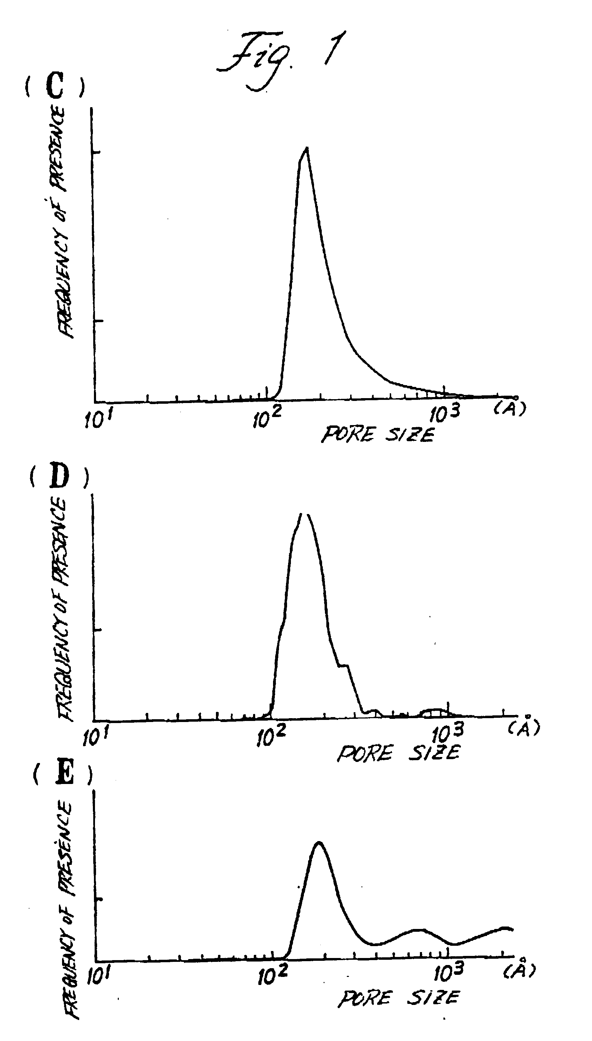

A solution of 201g of aluminium sulphate and 200 ml of water was added to obtain a precipitate. Repeating decantation for several times, the precipitate was washed. The washed precipitate was filtered and dried to obtain the dried gel. The dried gel was baked at 300°C for 1h and at 450°C, 600°C and 800°C for 3 h respectively, to obtain sample (a). The resultant alumina was in white powder form. In addition, further baking at 1020°C for 3h was performed to obtain sample (b). The specific surface areas of the samples (a) and (b) are shown in the appended table. Also, with respect to the sample (b), the pore distribution was measured by mercury pressurization. The result of the measurement is shown in **Fig. 2.**

### COMPARATIVE EXAMPLE 2

To a solution containing 155.5g of aluminium sulphate, a solution of sodium aluminate was added until the pH reached 7. The precipitate was filtered. The precipitate was then washed until by adding a solution of barium nitrate, a precipitate was no longer formed. The precipitate was then dried and subjected to baking at 300°C for 1h and 450°C, 600°C, 800°C and 1020°C for 3h, respectively. The specific surface area is shown in the appended table.

### COMPARATIVE EXAMPLE 3

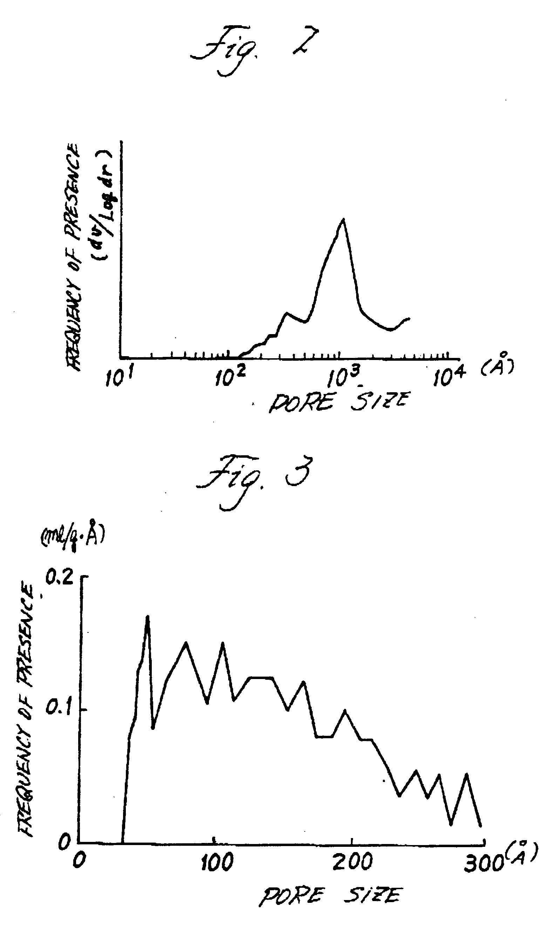

The pore distribution of alumina prepared by adding polyethylene glycol as shown in the aforementioned "Catalyst" Vol. 20, No. 3, 1978, is shown in **Fig. 3.**

As will be appreciated, the examples implementing the present invention exhibit a much higher uniformity of the pore distribution and a higher specific surface area. The excellent property of alumina produced by the process of the present invention will be appreciated by comparing the pore distribution as illustrated in **Fig. 1** with that of **Fig. 2.** Furthermore, the alumina produced through the process according to the present invention can maintain a satisfactorily high specific surface area even at a high temperature.

Furthermore, since in the process according to the present invention the alumina may be in a sol state the impregnation of a support with the sol or with the undried gel or putting same onto a support can be easily done without requiring any additive.

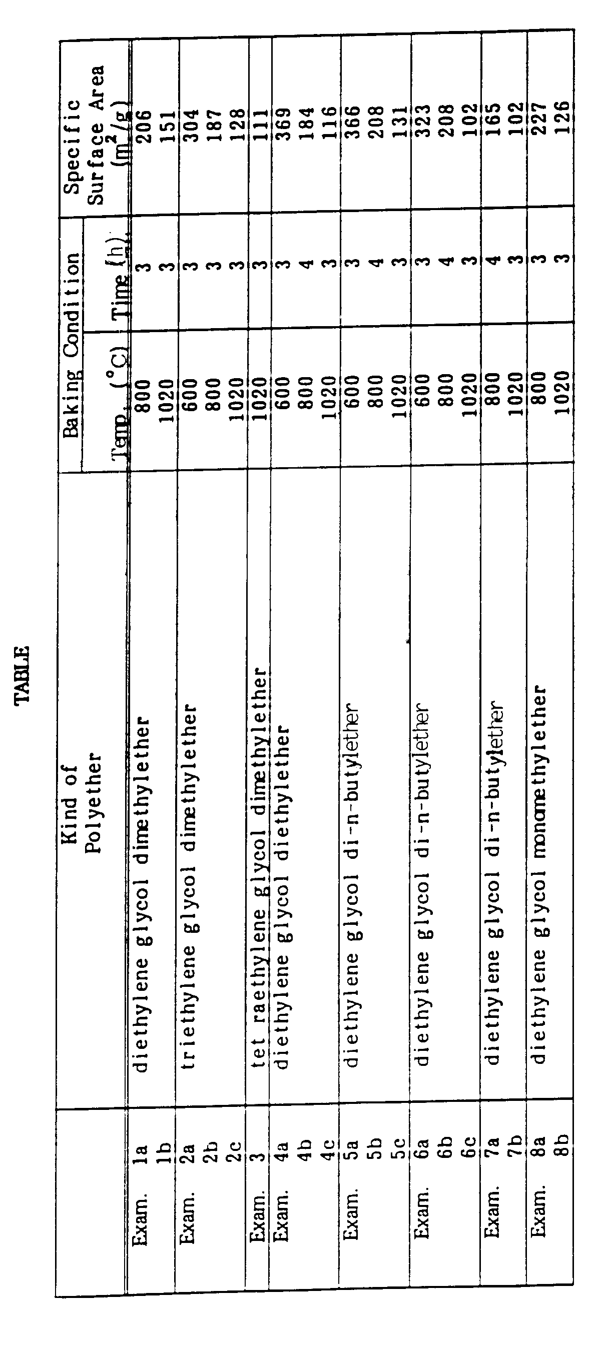

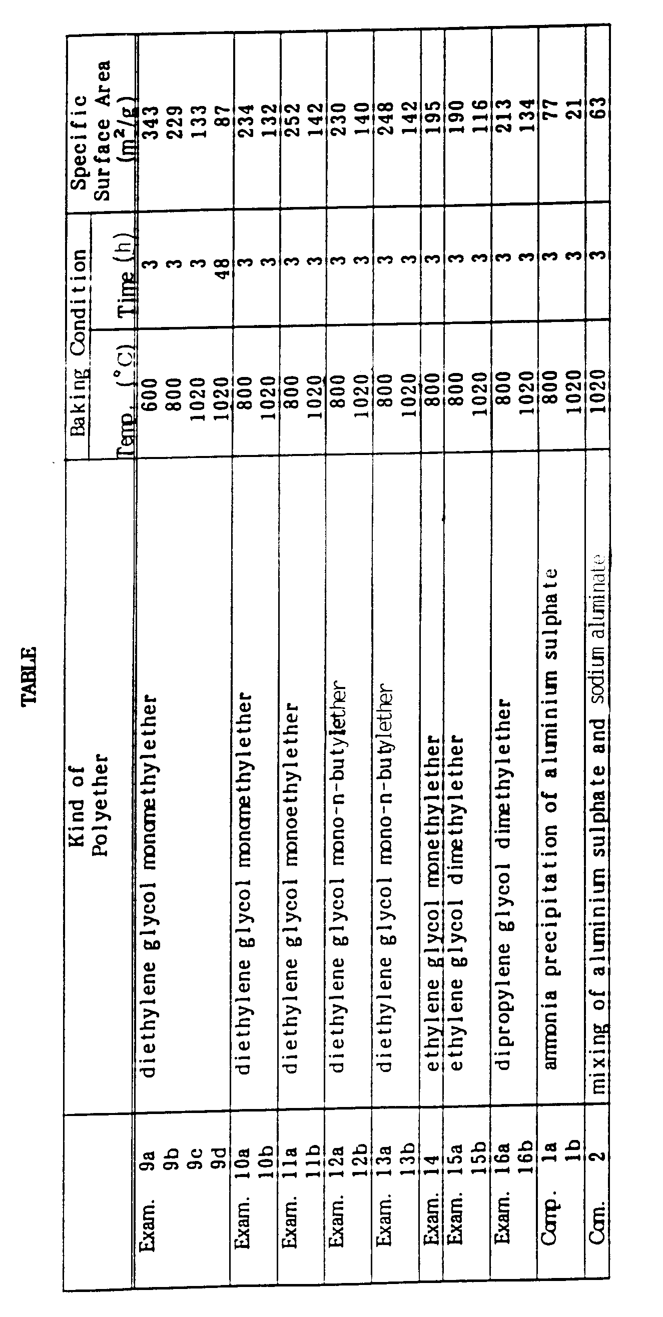

## Claims

1. A process for the production of alumina comprising the steps of:
a) dissolving an aluminium alkoxide in an organic polyether solvent so that the aluminium alkoxide reacts with the polyether to form a sol;
b) hydrolysing the sol so that a gel is formed;
c) drying the gel and baking the dried gel so that alumina is obtained.

2. The process according to claim 1, wherein the polyether of the organic polyether solvent is represented by the following general formula:
R₁(OR₂)ₗ(OR₃)ₘ(OR₄)ₙ OR₅
wherein R₁ is an alkyl group, R₂ to R₄ are alkylene groups and R₅ is an alkyl group or hydrogen, l is an integer of at least 1 and m and n are 0 or 1.

3. The process according to claim 2, wherein the reaction between the aluminium alkoxide and the organic polyether solvent to form a sol is performed at a temperature range between 10°C and the boiling point of the polyether.

4. The process according to claim 3, wherein the preferred reaction temperature range is 40°C to 190°C.

5. The process according to claim 2, wherein the polyether has 1 to 12 carbon atoms in the alkyl group and 2 to 16 carbon atoms in the alkylene groups and the sum of l, m and n is 1 to 6.

6. The process according to claim 5, wherein the polyether has 1 to 8 carbon atoms in the alkyl group and 2 to 12 carbon atoms in the alkylene groups and the sum of l, m and n is 1 to 4.

7. The process according to claim 1, wherein the baking of the dried alumina gel is performed at a temperature range of 400°C to 1200°C.

8. The process according to claim 7, wherein the baking of the dried alumina gel is performed at a temperature range of 600°C to 1150°C.

9. The process according to claim 6, wherein the polyether is selected from among diethylene glycol monomethylether, diethylene glycol dimethylether, diethylene glycol monoethylether, diethylene glycol diethylether, diethylene glycol dibutylether, tetraethylene glycol dimethylether, ethyl cellosolve, dodecandiol dimethylether, hexanediol dimethylether, hexanediol diethylether, diethylene glycol monobutylether, dipropylene glycol dimethylether and diethylene glycol butylmethylether.

10. The process according to claim 1, wherein the aluminium alkoxide is selected from among aluminium methoxide, aluminium ethoxide, aluminium iso-propoxide, aluminium n-propoxide, aluminium n-butoxide, aluminium sec-butoxide and aluminium tert-butoxide.

## Patentansprüche

1. Verfahren zur Herstellung von Aluminiumoxid, umfassend die folgenden Stufen:
a) Auflösen eines Aluminiumalkoxids in einem organischen Polyetherlösungsmittel, so daß das Aluminiumalkoxid mit dem Polyether reagiert, um ein Sol zu bilden;
b) Hydrolysieren des Sols, so daß ein Gel gebildet wird;
c) Trocknen des Gels und Backen des getrockneten Gels, so daß Aluminiumoxid erhalten wird.

2. Verfahren nach Anspruch 1, wobei der Polyether des organischen Polyetherlösungsmittels durch die folgende allgemeine Formel dargestellt ist:
R₁(OR₂)ₗ(OR₃)ₘ(OR₄)ₙOR₅
worin R₁ eine Alkylgruppe ist, R₂ bis R₄ Alkylengruppen sind und R₅ eine Alkylgruppe oder Wasserstoff ist, l eine ganze Zahl von mindestens 1 ist und m und n 0 oder 1 sind.

3. Verfahren nach Anspruch 2, wobei die Reaktion zwischen dem Aluminiumalkoxid und dem organischen Polyetherlösungsmittel, um ein Sol zu bilden, in einem Temperaturbereich von zwischen 10°C und dem Siedepunkt des Polyethers durchgeführt wird.

4. Verfahren nach Anspruch 3, wobei die bevorzugte Reaktionstemperatur von 40°C bis 190°C reicht.

5. Verfahren nach Anspruch 2, wobei der Polyether 1 bis 12 Kohlenstoffatome in der Alkylgruppe und 2 bis 16 Kohlenstoffatome in den Alkylengruppen aufweist und die Summe von l, m und n 1 bis 6 ist.

6. Verfahren nach Anspruch 5, wobei der Polyether 1 bis 8 Kohlenstoffatome in der Alkylgruppe und 2 bis 12 Kohlenstoffatome in den Alkylengruppen aufweist und die Summe von l, m und n 1 bis 4 ist.

7. Verfahren nach Anspruch 1, wobei das Backen des getrockneten Aluminiumoxidgels in einem Temperaturbereich von 400°C bis 1200°C durchgeführt wird.

8. Verfahren nach Anspruch 7, wobei das Backen des getrockneten Aluminiumoxidgels in einem Temperaturbereich von 600°C bis 1150°C durchgeführt wird.

9. Verfahren nach Anspruch 6, wobei der Polyether ausgewählt ist aus Diethylenglykolmonomethylether, Diethylenglykoldimethylether, Diethylenglykolmonoethylether, Diethylenglykoldiethylether, Diethylenglykoldiethylether, Diethylenglykoldibutylether, Tetraethylenglykoldimethylether, Ethylcellosolve, Dodecandioldimethylether, Hexandioldimethylether, Hexandioldiethylether, Diethylenglykolmonobutylether, Dipropylenglykoldimethylether und Diethylenglykolbutylmethylether.

10. Verfahren nach Anspruch 1, wobei das Aluminiumalkoxid ausgewählt ist aus Aluminiummethoxid, Aluminiumethoxid, Aluminium-iso-propoxid, Aluminium-n-propoxid, Aluminium-n-butoxid, Aluminium-sec-butoxid und Aluminium-tert-butoxid.

## Revendications

1. Procédé pour la production d'alumine comprenant les étapes de :
a) dissolution d'un alcoxyde d'aluminium dans un solvant polyéther organique de sorte que l'alcoxyde d'aluminium réagisse avec le polyéther pour former un sol;
b) hydrolyse du sol de sorte qu'un gel soit formé;
c) séchage du gel et cuisson du gel séché de sorte que l'alumine soit obtenue.

2. Procédé selon la revendication 1, où le polyéther du solvant polyéther organique est représenté par la formule générale suivante :
R₁(OR₂)₁(OR₃)ₘ(OR₄)ₙOR₅
où R₁ est un groupe alkyle, R₂ à R₄ sont des groupes alcylènes et R₅ est un groupe alkyle ou hydrogène, 1 est un entier d'au moins 1 et m et n sont 0 ou 1.

3. Procédé selon la revendication 2, où la réaction entre l'alcoxyde d'aluminium et le solvant polyéther organique pour former un sol est effectuée dans un intervalle de température entre 10°C et le point d'ébullition du polyéther.

4. Procédé selon la revendication 3, où la température de réaction préférée est dans l'intervalle de 40°C à 190°C.

5. Procédé selon la revendication 2, où le polyéther a 1 à 12 atomes de carbone dans le groupe alkyle et 2 à 16 atomes de carbone dans les groupes alcylène et la somme de l, m et n est 1 à 6.

6. Procédé selon la revendication 5, où le polyéther a 1 à 8 atomes de carbone dans le groupe alkyle et 2 à 12 atomes de carbone dans les groupes alcylène et la somme de l, m et n est 1 à 4.

7. Procédé selon la revendication 1, où la cuisson du gel d'alumine séché est effectuée dans un intervalle de température de 400°C à 1200°C.

8. Procédé selon la revendication 7, où la cuisson du gel d'alumine séché est effectuée dans un intervalle de température de 600°C à 1150°C.

9. Procédé selon la revendication 6, où le polyéther est choisi parmi un diéthylène glycol monométhyléther, un diéthylène glycol diméthyléther, un diéthylène glycol monoéthyléther, un diéthylène glycol diéthyléther, un diéthylène glycol dibutyléther, un tétraéthylène glycol diméthyléther, un éthyl céllosolve, un dodécandiol diméthyléther, un hexanediol diméthyléther, un héxanediol diéthyléther, un diéthylène glycol monobutyléther, un dipropylène glycol diméthyléther et un diéthylène glycol butylméthyléther.

10. Procédé selon la revendication 1, où l'alcoxyde d'aluminium est choisi parmi un méthoxyde d'aluminium, un éthoxyde d'aluminium, un iso-propoxyde d'aluminium, un n-propoxyde d'aluminium, un n-butoxyde d'aluminium, un secbutoxyde d'aluminium et un tert-butoxyde d'aluminium.
